# EUROPEAN PATENT SPECIFICATION

(11) **EP 3 736 031 B1**
(45) Date of publication and mention of the grant of the patent: **06.09.2023**
(21) Application number: 20162035.8
(22) Date of filing: 10.03.2020
(51) Int. Cl.: B01D 17/02, B01D 19/02, B03D 1/14, C02F 1/24, C02F 1/40

(54) **LIQUID TREATMENT APPARATUS AND LIQUID TREATMENT METHOD**
FLÜSSIGKEITSBEHANDLUNGSGERÄT UND FLÜSSIGBEHANDLUNGSVERFAHREN
APPAREIL DE TRAITEMENT LIQUIDE ET PROCÉDÉ DE TRAITEMENT LIQUIDE

(30) Priority: 10.05.2019 JP 2019089954; 29.11.2019 JP 2019215987
(43) Date of publication of application: 11.11.2020
(73) Proprietor: Sugino Machine Limited, Namerikawa City, Toyama 936-8577 (JP)
(72) Inventor: TANII, Akihiro, Uozu City, Toyama 9378511 (JP)
(74) Representative: Global IP Europe Patentanwaltskanzlei

(56) References cited:
- WO-A1-2015/037722
- CN-A- 106 219 652
- JP-A- 2010 012 418
- US-A1- 2008 047 903

## Description

### BACKGROUND

### 1. Technical Field

The present invention relates to a liquid treatment apparatus and a liquid treatment method.

### 2. Description of the Background

An emulsion demulsifying apparatus having a tank, a microbubble generator arranged in the tank, a liquid supply device for supplying a liquid to the microbubble generator, and a gas supply device for supplying a gas such as air to the microbubble generator has been proposed (Japanese Unexamined Patent Application Publication No. 2015-155092). In the conventional emulsion demulsifying apparatus, an emulsion in a liquid is demulsified by microbubbles emitted from the microbubble generator, separated into at least two kinds of liquids having no affinity to each other, and one liquid is floated together with the microbubbles.
US 2008/0047903 A1 discloses a control system and process for wastewater treatment, including a control system that monitors and adjusts mixture time, mixing energy, and the quantity of chemicals in the wastewater to optimize waste removal of a constantly changing liquid stream.
WO 2015/037722 A1 describes a floating oil suction device that can efficiently suck up the floating oil in mixed liquor.

### BRIEF SUMMARY

In the conventional emulsion demulsifying apparatus, the high specific gravity liquid is discarded together with the low specific gravity liquid to be removed.

The present invention provides a liquid treatment apparatus and a liquid treatment method for reducing a waste amount of a high specific gravity liquid.

A first aspect of the present invention provides a liquid treatment apparatus, including:
a tank;
a liquid supply pump configured to supply a treatment liquid stored in the tank;
a check valve including
   a first inlet port connected to an outside air, and
   a first outlet port;
a bubble tank into which the treatment liquid flows, the bubble tank including a floating matter discharge port arranged near a liquid surface of the treatment liquid, the floating matter discharge port configured to discharge a floating matter floated on the treatment liquid, and wherein the bubble tank includes a second inlet port arranged in a lower portion of the bubble tank;
a microbubble generator arranged outside the bubble tank, the microbubble generator configured to generate microbubbles by mixing air into the treatment liquid supplied from the liquid supply pump, and wherein the microbubble generator includes
   a treatment liquid inlet connected to the liquid supply pump,
   an air inlet connected to the first outlet port, and
   a second outlet port connected to the second inlet port;
a separation tank connected the bubble tank at a lower portion of the bubble tank; and
a circulation pipe configured to return the treatment liquid overflown from the liquid surface in the separation tank to the tank, wherein an opening at the upper end of the circulation pipe serves as a circulation port, wherein the height of the liquid surface of the treatment liquid is determined by a position of the circulation port;
   wherein
the floating matter discharge port is disposed at substantially the same height as
the circulation port or slightly higher than the circulation port;
   wherein
the bubble tank includes a bubble outlet arranged at upper portion of the bubble tank,
   wherein
the bubble outlet is located above the circulation port, the lower end of the bubble outlet being located surely above the liquid surface,
the liquid treatment apparatus further comprising:
   a collecting trough arranged below the bubble outlet, the collecting trough configured to collect the floating matter discharged from the bubble outlet; and
   a defoaming pump including
      a suction port connected to the collecting trough, and
      a discharge port connected to the bubble tank.

A second aspect of the present invention provides a liquid treatment method, using an apparatus according to the invention, including:
storing a treatment liquid containing foreign matter or oil content in a tank;
supplying the treatment liquid from the tank to a microbubble generator arranged outside of a bubble tank, and generating microbubbles with the microbubble generator by mixing air into the treatment liquid;
supplying the treatment liquid mixed with the microbubbles into the bubble tank;
flowing the treatment liquid into a separation tank through a lower part of the bubble tank;
overflowing the treatment liquid to an opening at the upper end of a circulation pipe, said opening serving as a circulation port, wherein the height of the liquid surface of the treatment liquid is determined by a position of the circulation port, and
circulating with said circulation pipe the treatment liquid from the separation tank into the tank;
floating the microbubbles in the bubble tank by adhering the microbubbles to the foreign matter or the oil content;
discharging a floating matter from above a liquid surface of the bubble tank via a floating matter discharge port, wherein the floating matter discharge port is disposed at substantially the same height as the circulation port or slightly higher than the circulation port (31a), the height of the discharge port being arranged near the liquid surface;
filling the bubble tank with the floating matter containing floated microbubbles, the foreign matter or the oil content, and the treatment liquid to overflow from a bubble outlet of the bubble tank, wherein the bubble outlet is located above the circulation port, the lower end of the bubble outlet being located surely above the liquid surface;
collecting the floating matter having overflown through the bubble outlet in a collecting trough; and
returning the floating matter collected from the collecting trough to the bubble tank with the microbubbles collapsed.

Preferably, the bubble tank is a closed tank. The microbubble generator is arranged outside the bubble tank. The microbubble generator is arranged in a path connecting the tank and the bubble tank. The lower end of the bubble outlet is apart from the liquid surface of the treatment liquid. Preferably, the upper end of the bubble outlet is lower than the top plate. The space extending above the liquid surface of the bubble tank is called as a bubble floating tank. The discharge port is arranged in the bubble tank. The height of the discharge port is in the vicinity of the liquid level. The height of the discharge port may be higher than the liquid level. The defoaming pump is a vacuum pump. The coalescer is disposed below the liquid surface of the treatment liquid.

For example, the bubble generator is a air-shear type. The bubble generator may be a rotational flow type bubble generator.

According to the liquid treatment apparatus and the liquid treatment method of the present invention, the waste amount of the high specific gravity liquid can be reduced.

### BRIEF DESCRIPTION OF DRAWINGS

FIG. 1 shows a liquid treatment apparatus according to the first embodiment.
FIG. 2 is a perspective view of a partially removed treatment tank according to the first embodiment.
FIG. 3 is a cross-sectional view taken along plane III of FIG. 2.
FIG. 4 is a flowchart showing a liquid treatment method according to the first embodiment.
FIG. 5 shows a liquid treatment apparatus according to the second embodiment.
FIG. 6 is a perspective view of a partially removed treatment tank according to the second embodiment.

### DETAILED DESCRIPTION

### (First Embodiment)

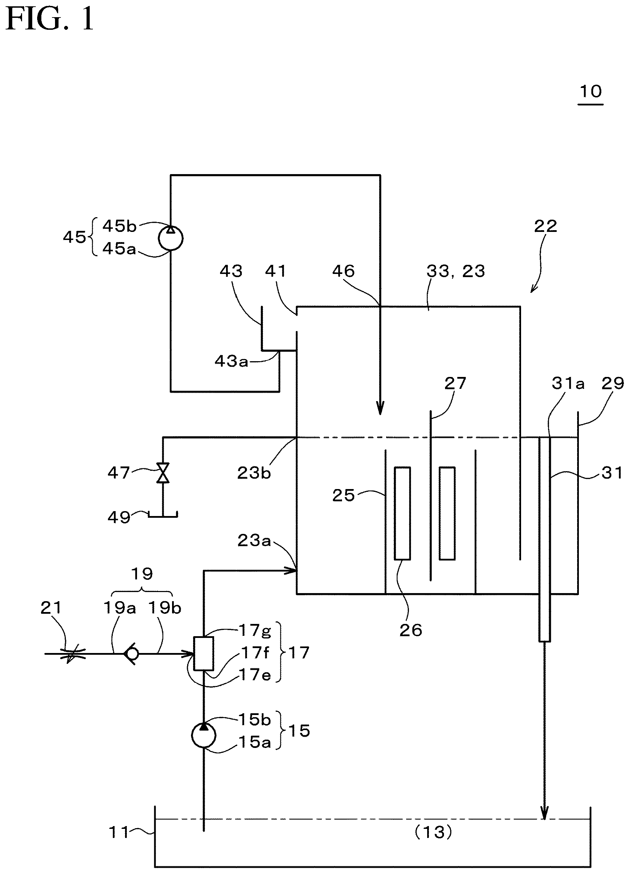

As shown in FIG. 1, a liquid treatment apparatus 10 according to the present embodiment includes a liquid supply pump 15, a generator (a microbubble generator) 17, and a treatment tank 22. The liquid treatment apparatus 10 may include a check valve 19, a throttle 21, a discharge valve (a floating matter discharge valve) 47, a defoaming pump 45, and a drain tank 49.

The liquid treatment apparatus 10 removes foreign matter and oil content contained in a treatment liquid 13 stored in the tank 11. The tank 11 is, for example, a tank of a machine tool or a washing machine. The treatment liquid 13 is, for example, an aqueous coolant or an aqueous cleaning liquid. The foreign matter is, for example, chip, fiber scrap, or abrasive grains. The oil content is, for example, oil or grease. The foreign matter and the oil content are turbid in the treatment liquid 13.

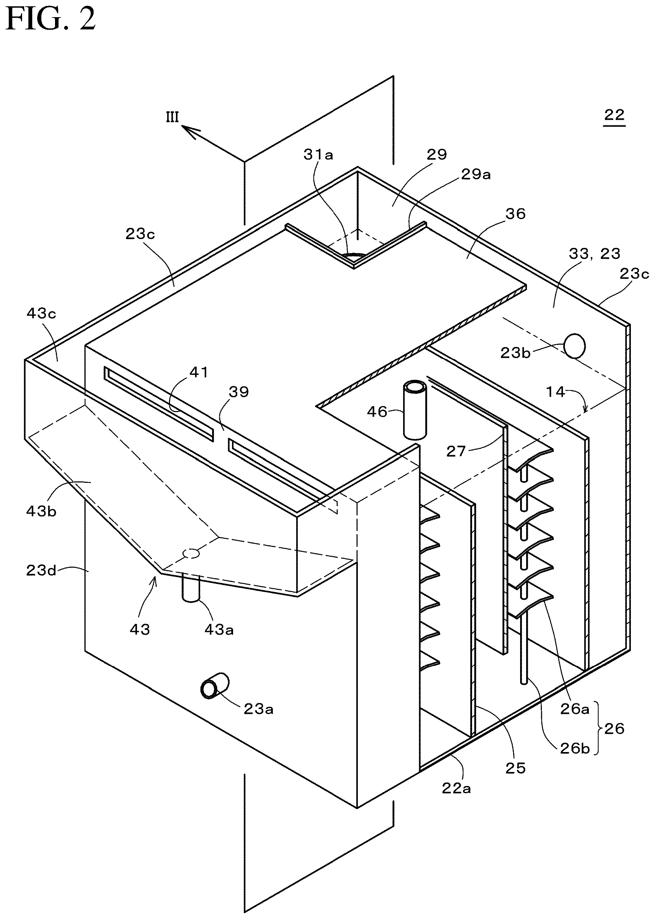

As shown in FIG. 2, the treatment tank 22 includes a bubble tank 23, a separation tank 29, a circulation port 31a, and a discharge port (a floating matter discharge port) 23b. The treatment tank 22 may include a top plate 36, a side wall 39, a lower partition plate 25, an upper partition plate 27, a circulation pipe 31, an external thread 31b, an inlet port (a second inlet port) 23a, a bubble outlet 41, a collecting trough 43, a return port 46, and a coalescer 26.

The treatment tank 22 is substantially rectangular parallelepiped and has a bottom surface 22a. For example, the treatment tank 22 is installed above the tank 11. The bottom surface 22a is shared by the bubble tank 23 and the separation tank 29. The bottom surface 22a may be arranged horizontally.

The separation tank 29 is disposed at one corner of the treatment tank 22 when viewed from above. The separation tank 29 is separated from the bubble tank 23 by an L-shaped separation wall 29a when viewed from above. A lower portion of the separation wall 29a is opened to connect the separation tank 29 and the bubble tank 23.

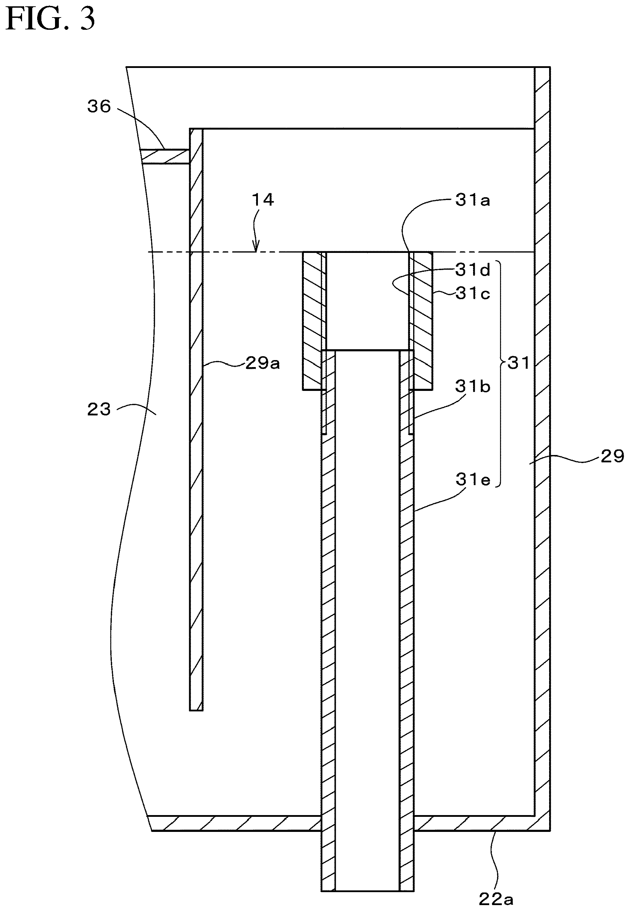

Plane III includes the centerline of the circulation pipe 31. As shown in FIG. 3, the circulation pipe 31 is disposed upright in the center of the separation tank 29. An opening at the upper end of the circulation pipe 31 serves as a circulation port 31a. The treatment liquid 13 flowing into the treatment tank 22 overflows to the circulation port 31a and returns to the tank 11. The height of the liquid surface 14 of the treatment liquid 13 is determined by a position of the circulation port 31a.

The circulation pipe 31 may include a fixed pipe 31e, an external thread 31b, and an adjustment port 31c. The fixed pipe 31e is disposed upright from the bottom surface 22a. The external thread 3 1b is formed at the upper end portion of the fixed pipe 31e. The adjustment port 31c has an internal thread 31d on its inner surface. The adjustment port 31c is screwed into the external thread 31b. The circulation pipe 31 is connected to the tank 11. The liquid level adjustment port 31c adjusts the height of the liquid surface 14 in the separation tank 29 by the screwing amount.

As shown in FIG. 2, the bubble tank 23 includes side plates 23c, 23d, a top plate 36, and a side wall 39. The upper end of the side plate 23c may be higher than the top plate 36. The upper end of the side plate 23c may be higher than the upper end of the separation wall 29a. The upper end of the side wall 39 is lower than the upper end of the side plate 23c. The side wall 39 separates the bubble tank 23 from the collecting trough 43. The top plate 36 may be arranged horizontally. The height of the top plate 36 is surely higher than the liquid surface 14. The bubble tank 23 is closed by the side plate 23c, the side wall 39, and the top plate 36. The bubble tank 23 includes a floating chamber 33, which is a closed space, above the liquid surface 14.

The bubble outlet 41 is arranged on the upper part of the side wall 39. The lower end of the bubble outlet 41 is located surely above the liquid surface 14. Preferably, the upper end of the bubble outlet 41 is separated from the top plate 36. One or more bubble outlets 41 may be arranged. The bubble outlet 41 may be disposed on one side far from the separation tank 29 when viewed from above.

The upper partition plate 27 stands inside the bubble tank 23 with a gap from the bottom surface 22a. The upper partition plate 27 is parallel to the side plate 23d. The upper end of the upper partition plate 27 is higher than the circulation port 31a. The upper partition plate 27 extends above the liquid surface 14.

The lower partition plate 25 is in contact with the bottom surface 22a, and stands on the bubble tank 23. The lower partition plate 25 is disposed between the side plate 23d and the upper partition plate 27 in parallel with the side plate 23d. The upper end of the lower partition plate 25 is lower than the circulation port 31a. The upper end of the lower partition plate 25 is located below the liquid surface 14.

One or more upper partition plates 27 and one or more lower partition plates 25 may be disposed. For example, only one lower partition plate 25 may be disposed. The upper partition plate 27 and the lower partition plate 25 are alternately arranged.

The collecting trough 43 is connected to the upper part of the side plate 23d, and is disposed outside the bubble tank 23. The collecting trough 43 is arranged to face the bubble outlet 41. The collecting trough 43 includes a side plate 43c, a bottom plate 43b, and a collecting port 43a. The side plate 43c is continuous with the side plate 23c. The upper end of the side plate 43c may have the same height as the upper end of the side plate 23c. Preferably, the bottom plate 43b is inclined downward toward the collecting port 43a. The collecting port 43a is disposed at the bottom of the collecting trough 43.

The discharge port 23b is disposed at substantially the same height as the circulation port 31a. The discharge port 23b may be disposed slightly higher than the circulation port 31a. The discharge valve 47 is a two-way valve. The discharge valve 47 is, for example, a manual valve or a solenoid valve. The discharge port 23b is connected to one port of the discharge valve 47. The other port of the discharge valve 47 is connected to a drain tank 49.

The inlet port 23a is disposed at the lower part of the side plate 23d. The inlet port 23a may be disposed on the bottom surface 22a. Preferably, the inlet port 23a is disposed at a position far from the separation tank 29 when viewed from above. For example, the inlet port 23a is disposed at a position farther from the separation tank 29 than the lower partition plate 25 and the upper partition plate 27.

The return port 46 may be disposed on the top plate 36. The return port 46 extends in the vertical direction. The lower end of the return port 46 may be disposed below the circulation port 31a. Preferably, when viewed from above, the return port 46 is located at a position far from the separation tank 29. For example, the return port 46 is disposed at a position farther from the separation tank 29 than the lower partition plate 25 and the upper partition plate 27 when viewed from above.

The coalescer 26 is disposed along the side plate 23d, the upper partition plate 27, and the lower partition plate 25. The coalescer 26 has a plurality of plates 26a and connecting rods 26b. The plate 26a is, for example, in an elongated rectangle shape, and extends horizontally. The plate 26a has a size of, for example, 30mm x 60mm to 50mm x 100mm. The two long sides of the plate 26a are bent downward, for example. The cross section of the plate 26a may be V-shaped or U-shaped. The plates 26a are arranged in the vertical direction at equal intervals, for example. The plurality of plates 26a are connected by the connecting rod 26b.

The liquid supply pump 15 has a liquid supply port 15a and a discharge port 15b. The liquid supply pump 15 is, for example, a centrifugal pump or a pneumatically driven diaphragm pump. The liquid supply pump 15 may be disposed in the tank 11. The discharge port 15b is connected to the inlet port 23a via the generator 17. The liquid supply port 15a is connected to the tank 11.

The generator 17 is, for example, a known microbubble generator. The generator 17 is, for example, of the air shear type. Preferably, the generator 17 generates bubbles having a size between 20µm and 50µm.

The generator 17 is arranged outside the bubble tank 23. The generator 17 has an air inlet 17e, a treatment liquid inlet 17f, and an outlet (a second outlet port) 17g. Preferably, the air inlet 17e is connected to the outside air via a check valve 19 and a throttle 21. The check valve 19 has an inlet (a first inlet port) 19a and an outlet (a first outlet port) 19b. The inlet 19a is connected to a throttle 21. The outlet 19b is connected to the air inlet 17e. The check valve 19 prevents the treatment liquid from being discharged from the air inlet 17e to the outside air. The treatment liquid inlet 17f is connected to the discharge port 15b. The outlet 17g is connected to the inlet port 23a.

The defoaming pump 45 has a suction port 45a and a discharge port 45b. The defoaming pump 45 is, for example, an ejector pump, a diaphragm pump, or a rotary pump. The suction port 45a is connected to the collecting port 43a. The discharge port 45b is connected to the return port 46.

The bubble outlet 41, the collecting trough 43, the defoaming pump 45, and the return port 46 may be omitted.

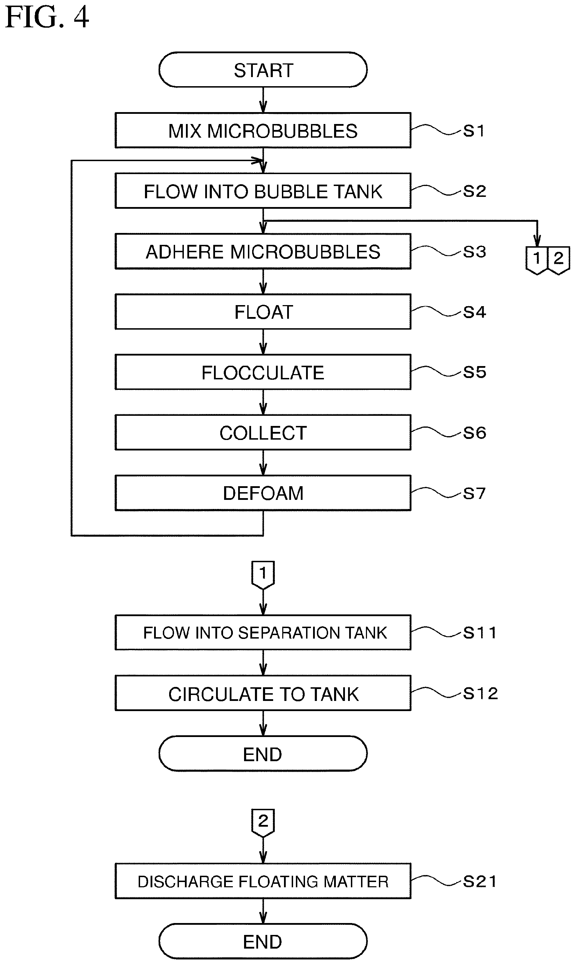

The liquid treatment method will be described with reference to FIGS. 1 and 4.

The liquid supply pump 15 supplies the treatment liquid 13 from the tank 11 to the generator 17. In step S1, the generator 17 sucks air from the air inlet 17e, and mixes the air into the treatment liquid 13 as fine bubbles.

In step S2, the treatment liquid 13 mixed with the fine bubbles flows into the bubble tank 23 from the inlet port 23a.

In step S3, the fine bubbles adhere to the oil content or foreign matter in the treatment liquid 13.

The treatment liquid 13 flows through the bubble tank 23 while circulating above the lower partition plate 25 and below the upper partition plate 27. In step S4, the oil content or foreign matter to which the fine bubbles are adhered floats in the bubble tank 23.

In step S5, the oil content and foreign matter to which the bubbles are adhered are flocculated. When the treatment liquid 13 flows through the coalescer 26, the flow of the treatment liquid 13 is disturbed. The oil content or foreign matter to which the air bubbles are adhered collides with the plate 26a, or the oil content or foreign matter to which the air bubbles are adhered comes into contact with each other, thereby promoting the flocculation of the oil content or foreign matter.

The oil content and foreign matter float as a floating matter in the floating chamber 33 together with the bubbles. When the floating matter fills the floating chamber 33, the floating matter overflows from the bubble outlet 41. In step S6, the overflowing floating matter is collected in the collecting trough 43.

The defoaming pump 45 sucks the collected floating matter. In step S7, the bubbles in the floating matter collapse and disappear upon depressurization. The defoamed floating matter flows into the bubble tank 23 through the return port 46.

In step S11, the treatment liquid 13 flows into the separation tank 29 from below the separation wall 29a.

In step S12, the treatment liquid 13 overflows into the circulation port 31a and circulates to the tank 11 through the circulation pipe 31.

In step S21, the discharge valve 47 is opened to discharge the floating matter from the discharge port 23b. The discharge valve 47 is opened, for example, every 500 hours to discharge the floating matter.

Steps S1 to S7, S11, and S12 are executed continuously. Steps S6 and S7 may be omitted.

The floating matter overflown from the bubble outlet 41 is collected in the collecting trough 43, and returned to the bubble tank 23 after defoamed. Therefore, the treatment liquid 13 contained in the floating matter discharged from the discharge port 23b decreases.

Since the bubble tank 23 is closed, the disappearance of bubbles is enhanced. Since the side plate 23c extends upwardly beyond the top plate 36, the bubbles overflown from the bubble outlet 41 are restrained from overflowing from the treatment tank 22.

### (Second Embodiment)

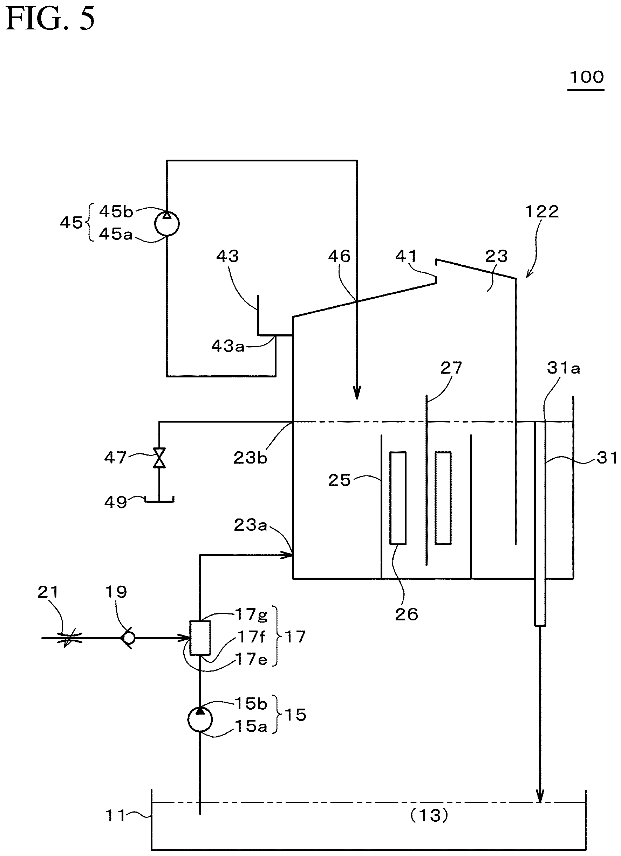

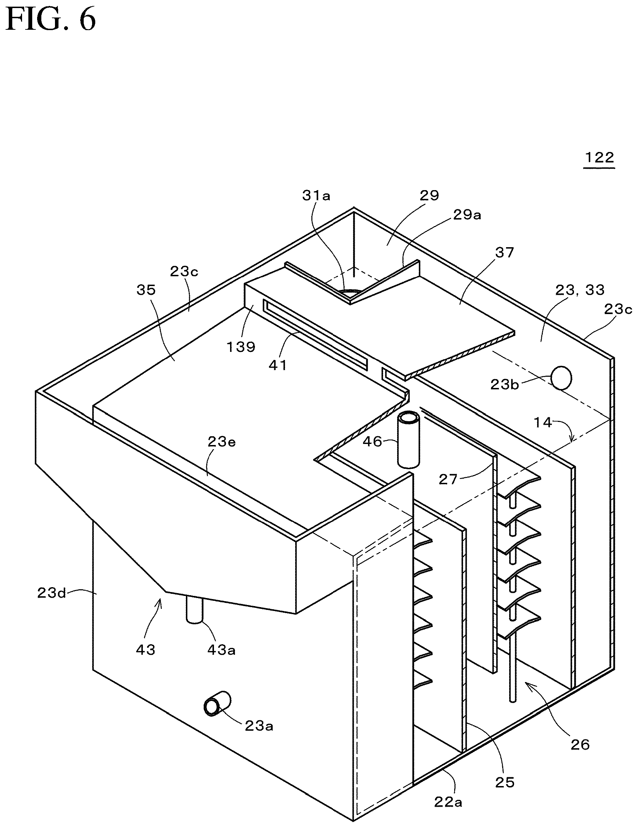

As shown in FIGS. 5 and 6, the liquid treatment apparatus 100 of the present embodiment includes a treatment tank 122. The treatment tank 122 includes a first top plate 35, a second top plate 37, a side plate 23e, and a side wall 139.

The side plate 23e partitions the bubble tank 23 and the collecting trough 43. The upper end of the side plate 23e is lower than the upper end of the side plate 23c.

The first top plate 35 and the second top plate 37 cover the upper portion of the bubble tank 23.

The first top plate 35 is inclined so as to get higher from the upper end of the side plate 23e toward the center of the treatment tank 122. The first top plate 35 is connected to the side plate 23e.

The second top plate 37 is disposed higher than the first top plate 35 at the center of the treatment tank 122. The second top plate 37 may be inclined such that a point distant from the side plate 23d is downward. The second top plate 37 is connected to the separation wall 29a. The second top plate 37 is surely separated from the liquid surface 14.

The bubble outlet 41 is disposed above the first top plate 35 and below the second top plate 37. The bubble outlet 41 is located above the circulation port 31a. A side wall 139 may be disposed between the first top plate 35 and the second top plate 37. The bubble outlet 41 may be disposed in the side wall 139. For example, the side wall 139 having a narrow width in the vertical direction is disposed between the first top plate 35 and the second top plate 37, and a plurality of elongated bubble outlets 41 extending horizontally are disposed on the side wall 139. The side wall 139 holds the first top plate 35 and the second top plate 37.

The return port 46 may be disposed on the first top plate 35.

The liquid treatment method will be described with reference to FIG. 4. Floating oil content and foreign matter float above the liquid surface 14 together with bubbles. When the floating matter fills the floating chamber 33, the floating matter overflows from the bubble outlet 41. The overflown floating matter flows down the upper surface of the first top plate 35, and is collected in the collecting trough 43 in step S6.

The other steps are the same as those of the first embodiment.

It should be noted that the present invention is not limited to the embodiments described above, and various modifications can be made without departing from the scope of the present invention. While the foregoing embodiments illustrate preferred examples, those skilled in the art will appreciate that various alternatives, modifications, variations, or improvements may be made in light of the teachings disclosed herein, while remaining within the scope of the invention, which is defined by the claims.

### REFERENCE SIGNS LIST

- 10: Liquid treatment apparatus
- 11: Tank
- 13: Treatment liquid
- 17: Generator (microbubble generator)
- 23: Bubble tank
- 23b: Discharge port (floating matter discharge port)
- 29: Separation tank
- 43: Collecting trough
- 45: Defoaming pump
- 31a: Circulation port

## Claims

1. A liquid treatment apparatus, comprising:
a tank (11);
a liquid supply pump (15) configured to supply a treatment liquid (13) stored in the tank (11);
a check valve (19) including
a first inlet port (19a) connected to an outside air, and
a first outlet port (19b);
a bubble tank (23) into which the treatment liquid (13) flows, the bubble tank (23) including a floating matter discharge port (23b) arranged near a liquid surface (14) of the treatment liquid (13), the floating matter discharge port (23b) configured to discharge a floating matter floated on the treatment liquid (13), and wherein the bubble tank (23) includes a second inlet port (23a) arranged in a lower portion of the bubble tank (23);
a microbubble generator (17) arranged outside the bubble tank (23), the microbubble generator (17) configured to generate microbubbles by mixing air into the treatment liquid (13) supplied from the liquid supply pump (15), and wherein the microbubble generator (17) includes
a treatment liquid inlet (17f) connected to the liquid supply pump (15),
an air inlet (17e) connected to the first outlet port (19b), and
a second outlet port (17g) connected to the second inlet port (23a);
a separation tank (29) connected to the bubble tank (23) at a lower portion of the bubble tank (23); and
a circulation pipe (31) configured to return the treatment liquid (13) overflown from the liquid surface (14) in the separation tank (29) to the tank (11), wherein an opening at the upper end of the circulation pipe (31) serves as a circulation port (31a), wherein the height of the liquid surface (14) of the treatment liquid (13) is determined by a position of the circulation port (31a);
wherein
the floating matter discharge port (23b) is disposed at substantially the same height as the circulation port (31a) or slightly higher than the circulation port (31a);
wherein the bubble tank (23) includes a bubble outlet (41) arranged at upper portion of the bubble tank (23),
wherein
the bubble outlet (41) is located above the circulation port (31a), the lower end of the bubble outlet (41) being located surely above the liquid surface,
the liquid treatment apparatus further comprising:
a collecting trough (43) arranged below the bubble outlet (41), the collecting trough (43) configured to collect the floating matter discharged from the bubble outlet (41); and
a defoaming pump (45) including
a suction port (45a) connected to the collecting trough (43), and
a discharge port (45b) connected to the bubble tank (23).

2. The liquid treatment apparatus according to claim 1, further comprising:
a floating matter discharge valve (47) connected to the floating matter discharge port (23b).

3. The liquid treatment apparatus according to claim 1 or 2, further comprising:
a lower partition plate (25) arranged in the bubble tank (23), the lower partition plate (25) having
a lower end connected to a bottom surface (22a) of the bubble tank (23), and
an upper end located below the liquid surface (14), and
an upper partition plate (27) arranged in the bubble tank (23), the upper partition plate (27) having
an upper end located above the liquid surface (14), and
a lower end located above the bottom surface (22a) near the bottom surface (22a).

4. The liquid treatment apparatus according to any one of claims 1 to 3, further comprising:
a coalescer (26) arranged in the bubble tank (23), the coalescer (26) including a plurality of plates (26a) each extending in a horizontal direction, the plurality of plates (26a) separately arranged in a vertical direction.

5. The liquid treatment apparatus according to claim 1, wherein
the bubble tank (23) includes a side wall (39), and
the bubble outlet (41) is arranged on the side wall (39).

6. The liquid treatment apparatus according to claim 1 or 5, wherein the bubble outlet (41) is arranged in an upper portion of the bubble tank (23) apart from the liquid surface (14).

7. The liquid treatment apparatus according to any one of claims 1 or 5 or 6, wherein
the collecting trough (43) includes a collecting port (43a) arranged below the collecting trough (43), the collecting port (43a) connected to the suction port (45a).

8. The liquid treatment apparatus according to any one of claims 1 or 5 or 6 or 7, wherein
the bubble tank (23) includes
a first top plate (35) inclined from the collecting trough (43) toward a center of the bubble tank (23), and
a second top plate (37) inclined from the opposite side of the collecting trough (43) toward the center of the bubble tank (23) above the first top plate (35),
the bubble outlet (41) is arranged between the first top plate (35) and the second top plate (37).

9. A liquid treatment method using a liquid treatment apparatus according to anyone of the previous claims, comprising:
storing a treatment liquid (13) containing foreign matter or oil content in a tank (11);
supplying the treatment liquid (13) from the tank (11) to a microbubble generator (17) arranged outside of a bubble tank (23), and generating microbubbles with the microbubble generator (17) by mixing air into the treatment liquid (13);
supplying the treatment liquid (13) mixed with the microbubbles into the bubble tank (23);
flowing the treatment liquid (13) into a separation tank (29) through a lower part of the bubble tank (23);
overflowing the treatment liquid to an opening at the upper end of a circulation pipe (31), said opening serving as a circulation port (31a), wherein the height of the liquid surface (14) of the treatment liquid is determined by a position of the circulation port (31a), and
circulating with said circulation pipe (31) the treatment liquid (13) from the separation tank (29) into the tank (11);
floating the microbubbles in the bubble tank (23) by adhering the microbubbles to the foreign matter or the oil content;
discharging a floating matter from above a liquid surface (14) of the bubble tank (23) via a floating matter discharge port (23b), wherein the floating matter discharge port (23b) is disposed at substantially the same height as the circulation port (31a) or slightly higher than the circulation port (31a), the height of the discharge port (23b) being arranged near the liquid surface (14);
filling the bubble tank (23) with the floating matter containing floated microbubbles, the foreign matter or the oil content, and the treatment liquid (13) to overflow from a bubble outlet (41) of the bubble tank (23), wherein the bubble outlet (41) is located above the circulation port (31a), the lower end of the bubble outlet (41) being located surely above the liquid surface (14);
collecting the floating matter having overflown through the bubble outlet (41) in a collecting trough (43); and
returning the floating matter collected from the collecting trough (43) to the bubble tank (23) with the microbubbles collapsed.

10. The liquid treatment method according to claim 9, further comprising:
colliding the foreign matter or the oil content to which the microbubbles are adhered with a platelet (26a) to flocculate.

## Patentansprüche

1. Flüssigkeitsbehandlungsvorrichtung, die aufweist:
einen Tank (11);
eine Flüssigkeitszufuhrpumpe (15), die konfiguriert ist,
eine im Tank (11) gespeicherte Behandlungsflüssigkeit (13) zuzuführen;
ein Rückschlagventil (19), das aufweist:
eine erste Einlassöffnung (19a), die mit der Außenluft verbunden ist, und
eine erste Auslassöffnung (19b);
einen Blasentank (23), in den die Behandlungsflüssigkeit (13) fließt, wobei der Blasentank (23) eine Schwimmstoffabgabeöffnung (23b) enthält, die in der Nähe einer Flüssigkeitsoberfläche (14) der
Behandlungsflüssigkeit (13) angeordnet ist, wobei die Schwimmstoffabgabeöffnung (23b) konfiguriert ist, einen auf der Behandlungsflüssigkeit (13) schwimmenden Schwimmstoff abzugeben, und wobei der Blasentank (23) eine zweite Einlassöffnung (23a) enthält, die in einem unteren Abschnitt des Blasentanks (23) angeordnet ist;
einen Mikroblasengenerator (17), der außerhalb des Blasentanks (23) angeordnet ist, wobei der
Mikroblasengenerator (17) konfiguriert ist, Mikroblasen durch Mischen von Luft in die von der
Flüssigkeitszufuhrpumpe (15) zugeführte
Behandlungsflüssigkeit (13) zu erzeugen, und wobei der Mikroblasengenerator (17) aufweist:
einen Behandlungsflüssigkeitseinlass (17f), der mit der Flüssigkeitszufuhrpumpe (15) verbunden ist,
einen Lufteinlass (17e), der mit der ersten Auslassöffnung (19b) verbunden ist, und
eine zweite Auslassöffnung (17g), die mit der zweiten
Einlassöffnung (23a) verbunden ist;
einen Trenntank (29), der mit dem Blasentank (23) an einem unteren Abschnitt des Blasentanks (23) verbunden ist; und
eine Umwälzleitung (31), die konfiguriert ist, die Behandlungsflüssigkeit (13), die von der
Flüssigkeitsoberfläche (14) im Trenntank (29) überläuft,
zum Tank (11) zurückzuführen, wobei eine Öffnung am oberen Ende der Umwälzleitung (31) als Umwälzöffnung (31a) dient,
wobei die Höhe der Flüssigkeitsoberfläche (14) der Behandlungsflüssigkeit (13) durch eine Position der Umwälzöffnung (31a) bestimmt wird;
wobei
die Schwimmstoffabgabeöffnung (23b) im Wesentlichen in derselben Höhe wie die Umwälzöffnung (31a) oder etwas höher als die Umwälzöffnung (31a) angeordnet ist;
wobei der Blasentank (23) einen Blasenauslass (41) aufweist, der am oberen Abschnitt des Blasentanks (23) angeordnet ist, wobei
der Blasenauslass (41) über der Umwälzöffnung (31a) angeordnet ist, wobei das untere Ende des Blasenauslasses (41) sicher oberhalb der Flüssigkeitsoberfläche angeordnet ist,
wobei die Flüssigkeitsbehandlungsvorrichtung ferner aufweist
eine Sammelwanne (43), die unter dem Blasenauslass (41) angeordnet ist, wobei die Sammelwanne (43) konfiguriert ist, die aus dem Blasenauslass (41) abgegebenen Schwimmstoffe zu sammeln; und
eine Entschäumungspumpe (45), die aufweist:
eine Ansaugöffnung (45a), die mit der Sammelwanne (43) verbunden ist, und
eine Abgabeöffnung (45b), die mit dem Blasentank (23) verbunden ist.

2. Flüssigkeitsbehandlungsvorrichtung nach Anspruch 1, die ferner aufweist:
ein Schwimmstoffabgabeventil (47), das mit der Schwimmstoffabgabeöffnung (23b) verbunden ist.

3. Flüssigkeitsbehandlungsvorrichtung nach Anspruch 1 oder 2, die ferner aufweist:
eine untere Trennplatte (25), die im Blasentank (23) angeordnet ist, wobei die untere Trennplatte (25) aufweist:
ein unteres Ende, das mit einer Bodenfläche (22a) des Blasentanks (23) verbunden ist, und
ein oberes Ende, das sich unter der Flüssigkeitsoberfläche (14) befindet, und
eine obere Trennplatte (27), die im Blasentank (23) angeordnet ist, wobei die obere Trennplatte (27) aufweist:
ein oberes Ende, das sich über der Flüssigkeitsoberfläche (14) befindet, und
ein unteres Ende, das sich über der Bodenfläche (22a) in der Nähe der Bodenfläche (22a) befindet.

4. Flüssigkeitsbehandlungsvorrichtung nach einem der Ansprüche 1 bis 3, die ferner aufweist:
einen Tropfenabscheider (26), der im Blasentank (23) angeordnet ist, wobei der Tropfenabscheider (26) mehrere Platten (26a) aufweist, die sich jeweils in einer horizontalen Richtung erstrecken, wobei die mehreren Platten (26a) separat in einer vertikalen Richtung angeordnet sind.

5. Flüssigkeitsbehandlungsvorrichtung nach Anspruch 1, wobei
der Blasentank (23) eine Seitenwand (39) aufweist, und
der Blasenauslass (41) an der Seitenwand (39) angeordnet ist.

6. Flüssigkeitsbehandlungsvorrichtung nach Anspruch 1 oder 5, wobei der Blasenauslass (41) in einem oberen Abschnitt des Blasentanks (23) abseits der Flüssigkeitsoberfläche (14) angeordnet ist.

7. Flüssigkeitsbehandlungsvorrichtung nach einem der Ansprüche 1 oder 5 oder 6, wobei
die Sammelwanne (43) eine unter der Sammelwanne (43) angeordnete Sammelöffnung (43a) aufweist, wobei die Sammelöffnung (43a) mit der Saugöffnung (45a) verbunden ist.

8. Flüssigkeitsbehandlungsvorrichtung nach einem der Ansprüche 1 oder 5 oder 6 oder 7, wobei
der Blasentank (23) aufweist:
eine erste obere Platte (35), die von der Sammelwanne (43) zu einer Mitte des Blasentanks (23) geneigt ist, und
eine zweite obere Platte (37), die von der gegenüberliegenden Seite der Sammelwanne (43) zur Mitte des Blasentanks (23) über der ersten oberen Platte (35) geneigt ist,
der Blasenauslass (41) zwischen der ersten oberen Platte (35) und der zweiten oberen Platte (37) angeordnet ist.

9. Flüssigkeitsbehandlungsverfahren, das eine Flüssigkeitsbehandlungsvorrichtung nach einem der vorhergehenden Ansprüche verwendet, das aufweist:
Speichern einer Behandlungsflüssigkeit (13), die Fremdstoffe oder einen Ölgehalt enthält, in einem Tank (11) ;
Zuführen der Behandlungsflüssigkeit (13) aus dem Tank (11) zu einem Mikroblasengenerator (17), der außerhalb eines Blasentanks (23) angeordnet ist, und Erzeugen von Mikroblasen mit dem Mikroblasengenerator (17) durch Mischen von Luft in die Behandlungsflüssigkeit (13);
Zuführen der mit den Mikroblasen vermischten Behandlungsflüssigkeit (13) in den Blasentank (23);
Veranlassen, dass die Behandlungsflüssigkeit (13) in einen Trenntank (29) durch einen unteren Teil des Blasentanks (23) fließt;
Veranlassen, dass die Behandlungsflüssigkeit zu einer Öffnung am oberen Ende einer Umwälzleitung (31) überfließt, wobei die Öffnung als Umwälzöffnung (31a) dient, wobei die Höhe der Flüssigkeitsoberfläche (14) der Behandlungsflüssigkeit durch eine Position der Umwälzöffnung (31a) bestimmt wird, und
Umwälzen der Behandlungsflüssigkeit (13) aus dem Trenntank (29) in den Tank (11) mit der Umwälzleitung (31);
Aufschwämmen der Mikrobläschen im Blasentank (23) durch Anhaften der Mikrobläschen an den Fremdstoffen oder dem Ölgehalt;
Abgeben eines Schwimmstoffs von über einer Flüssigkeitsoberfläche (14) des Blasentanks (23) über eine Schwimmstoffabgabeöffnung (23b), wobei die Schwimmstoffabgabeöffnung (23b) im Wesentlichen in derselben Höhe wie die Umwälzöffnung (31a) oder etwas höher als die Umwälzöffnung (31a) angeordnet ist, wobei die Höhe der Abgabeöffnung (23b) nahe der Flüssigkeitsoberfläche (14) angeordnet ist;
Füllen des Blasentanks (23) mit dem Schwimmstoff, der schwimmende Mikrobläschen, Fremdstoffe oder den Ölgehalt enthält, und der Behandlungsflüssigkeit (13), um aus einem Blasenauslass (41) des Blasentanks (23) überzulaufen, wobei der Blasenauslass (41) über der Umwälzöffnung (3a) angeordnet ist, wobei das untere Ende des Blasenauslasses (41) sicher über der Flüssigkeitsoberfläche (14) angeordnet ist;
Sammeln des Schwimmstoffs, der durch den Blasenauslass (41) übergelaufen ist, in einer Sammelwanne (43); und
Zurückführen des aus der Sammelwanne (43) gesammelten Schwimmstoffs in den Blasentank (23) mit kollabierten Mikrobläschen.

10. Flüssigkeitsbehandlungsverfahren nach Anspruch 9, das ferner aufweist:
Kollidieren der Fremdstoffe oder des Ölgehalts, an dem die Mikrobläschen haften, mit einem Plättchen (26a), um auszuflocken.

## Revendications

1. Appareil de traitement de liquide, comprenant :
un réservoir (11) ;
une pompe d'alimentation en liquide (15) prévue pour refouler un liquide de traitement (13) stocké dans le réservoir (11) ;
un clapet anti-retour (19) présentant
un premier orifice d'entrée (19a) relié à l'air extérieur,
et
un premier orifice de sortie (19b) ;
un réservoir à bulles (23) où le liquide de traitement (13) s'écoule, ledit réservoir à bulles (23) comprenant un orifice d'évacuation de substances flottantes (23b) présenté près de la surface (14) du liquide de traitement (13), ledit orifice d'évacuation de substances flottantes (23b) étant prévu pour refouler les substances flottant sur le liquide de traitement (13), et le réservoir à bulles (23) comprenant un deuxième orifice d'entrée (23a) présenté dans une partie inférieure du réservoir à bulles (23) ;
un générateur de microbulles (17) disposé à l'extérieur du réservoir à bulles (23), ledit générateur de microbulles (17) étant prévu pour générer des microbulles en mélangeant de l'air au liquide de traitement (13) refoulé par la pompe d'alimentation en liquide (15), et ledit générateur de microbulles (17) comprenant
une entrée de liquide de traitement (17f) reliée à la pompe d'alimentation en liquide (15), une entrée d'air (17e) reliée au premier orifice de sortie (19b), et
un deuxième orifice de sortie (17g) relié au deuxième orifice d'entrée (23a) ;
un réservoir de séparation (29) relié au réservoir à bulles (23) dans une partie inférieure du réservoir à bulles (23) ; et
une conduite de circulation (31) prévue pour renvoyer le liquide de traitement (13) débordant de la surface de liquide (14) du réservoir de séparation (29) vers le réservoir (11), une ouverture à l'extrémité supérieure de la conduite de circulation (31) servant d'orifice de circulation (31a), la hauteur de la surface (14) du liquide de traitement (13) étant déterminée par l'emplacement de l'orifice de circulation (31a) ;
où
l'orifice d'évacuation de substances flottantes (23b) est disposé sensiblement à la même hauteur que l'orifice de circulation (31a) ou légèrement plus haut que l'orifice de circulation (31a) ;
où le réservoir à bulles (23) comprend une sortie de bulles (41) disposée dans la partie supérieure du réservoir à bulles (23), où
la sortie de bulles (41) est située au-dessus de l'orifice de circulation (31a), l'extrémité inférieure de la sortie de bulles (41) étant située nettement au-dessus de la surface de liquide,
ledit appareil de traitement de liquide comprenant en outre :
un bac de collecte (43) disposé en dessous de la sortie de bulles (41), ledit bac de collecte (43) étant prévu pour recueillir les substances flottantes évacuées par la sortie de bulles (41) ; et
une pompe de démoussage (45) présentant
un orifice d'aspiration (45a) relié au bac de collecte (43), et
un orifice de refoulement (45b) relié au réservoir à bulles (23) .

2. Appareil de traitement de liquide selon la revendication 1, comprenant en outre :
une vanne d'évacuation de substances flottantes (47) reliée à l'orifice d'évacuation de substances flottantes (23b).

3. Appareil de traitement de liquide selon la revendication 1 ou la revendication 2, comprenant en outre
une plaque de séparation inférieure (25) disposée dans le réservoir à bulles (23), ladite plaque de séparation inférieure (25) ayant
une extrémité inférieure reliée à la surface inférieure (22a) du réservoir à bulles (23), et
une extrémité supérieure située sous la surface de liquide (14), et
une plaque de séparation supérieure (27) disposée dans le réservoir à bulles (23), ladite plaque de séparation supérieure (27) ayant
une extrémité supérieure située au-dessus de la surface de liquide (14), et
une extrémité inférieure située au-dessus de la surface inférieure (22a) près de ladite surface inférieure (22a).

4. Appareil de traitement de liquide selon l'une des revendications 1 à 3, comprenant en outre
un coalesceur (26) disposé dans le réservoir à bulles (23), ledit coalesceur (26) présentant une pluralité de plaques (26a) s'étendant chacune dans la direction horizontale, les plaques de la pluralité de plaques (26a) étant disposées séparément dans la direction verticale.

5. Appareil de traitement de liquide selon la revendication 1, où
le réservoir à bulles (23) présente une paroi latérale (39), et
la sortie de bulles (41) est prévue sur la paroi latérale (39) .

6. Appareil de traitement de liquide selon la revendication 1 ou la revendication 5, où la sortie de bulles (41) est située dans une partie supérieure du réservoir à bulles (23), à l'écart de la surface de liquide (14).

7. Appareil de traitement de liquide selon l'une des revendications 1, 5 ou 6, où
le bac de collecte (43) présente un orifice de collecte (43a) situé en dessous du bac de collecte (43), ledit orifice de collecte (43a) étant relié à l'orifice d'aspiration (45a).

8. Appareil de traitement de liquide selon l'une des revendications 1, 5, 6 ou 7, où
le réservoir à bulles (23) comprend
une première plaque supérieure (35) inclinée depuis le bac de collecte (43) vers le centre du réservoir à bulles (23), et
une deuxième plaque supérieure (37) inclinée depuis le côté opposé du bac de collecte (43) vers le centre du réservoir à bulles (23) au-dessus de la première plaque supérieure (35),
la sortie de bulles (41) est située entre la première plaque supérieure (35) et la deuxième plaque supérieure (37) .

9. Procédé de traitement de liquide recourant à un appareil de traitement de liquide selon l'une des revendications précédentes, comprenant :
le stockage d'un liquide de traitement (13) contenant des substances étrangères ou de l'huile dans un réservoir (11) ;
le refoulement du liquide de traitement (13) du réservoir (11) vers un générateur de microbulles (17) disposé à l'extérieur d'un réservoir à bulles (23), et la génération de microbulles par le générateur de microbulles (17) en mélangeant de l'air au liquide de traitement (13) ;
le refoulement du liquide de traitement (13) mélangé aux microbulles vers le réservoir à bulles (23) ;
l'écoulement du liquide de traitement (13) vers un réservoir de séparation (29) par une partie inférieure du réservoir à bulles (23) ;
le débordement du liquide de traitement vers une ouverture à l'extrémité supérieure d'une conduite de circulation (31), ladite ouverture servant d'orifice de circulation (31a), la hauteur de la surface (14) du liquide de traitement étant déterminée par l'emplacement de l'orifice de circulation (31a), et
la circulation par la conduite de circulation (31) du liquide de traitement (13), du réservoir de séparation (29) au réservoir (11) ;
le flottement des microbulles dans le réservoir à bulles (23) par adhérence des microbulles aux substances étrangères ou au contenu d'huile ;
l'évacuation de substances flottantes au-dessus d'une surface de liquide (14) du réservoir à bulles (23) par un orifice d'évacuation de substances flottantes (23b), ledit orifice d'évacuation de substances flottantes (23b) étant situé sensiblement à la même hauteur que l'orifice de circulation (31a) ou légèrement plus haut que l'orifice de circulation (31a), ledit orifice d'évacuation (23b) étant situé à une hauteur à proximité de la surface de liquide (14) ;
le remplissage du réservoir à bulles (23) avec les substances flottantes contenant des microbulles flottantes,
les substances étrangères ou le contenu d'huile, et le liquide de traitement (13) de manière à déborder d'une sortie de bulles (41) du réservoir à bulles (23), la sortie de bulles (41) étant située au-dessus de l'orifice de circulation (31a), l'extrémité inférieure de la sortie de bulles (41) étant située nettement au-dessus de la surface de liquide (14) ;
le recueil des substances flottantes ayant débordé par la sortie de bulles (41) dans un bac de collecte (43) ; et
le retour des substances flottantes recueillies dans le bac de collecte (43) vers le réservoir à bulles (23) avec les microbulles effondrées.

10. Procédé de traitement de liquide selon la revendication 9, comprenant en outre : la collision des substances étrangères ou du contenu d'huile auxquels les microbulles adhèrent avec une lamelle (26a) pour floculation.
